(19) Europäisches Patentamt
European Patent Office
Office européen des brevets

(11) Veröffentlichungsnummer: **0 165 406**
**B1**

(12) # EUROPÄISCHE PATENTSCHRIFT

(45) Veröffentlichungstag der Patentschrift: **23.11.88**

(51) Int. Cl.⁴: **C 08 G 61/12**

(21) Anmeldenummer: **85104861.1**

(22) Anmeldetag: **22.04.85**

(54) **Unvernetzte, thermoplastisch verarbeitbare Polyetherketone und Verfahren zu ihrer Herstellung.**

(30) Priorität: **04.05.84 DE 3416445**

(43) Veröffentlichungstag der Anmeldung: **27.12.85 Patentblatt 85/52**

(45) Bekanntmachung des Hinweises auf die Patenterteilung: **23.11.88 Patentblatt 88/47**

(84) Benannte Vertragsstaaten: **BE DE FR GB IT NL**

(56) Entgegenhaltungen:
**EP-A-0 087 532**
**DE-A-1 645 153**
**DE-A-2 433 278**
**DE-A-3 241 444**
**DE-B-1 520 116**
**US-A-3 516 966**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch- Strasse 38, D-6700 Ludwigshafen (DE)**

(72) Erfinder: **Sterzel, Hans- Josef, Dr., Wasgauring 3, D-6701 Dansstadt- Schauernheim (DE)**

**EP 0 165 406 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Aromatische Polyetherketone, die nur aus mit Sauerstoff und Carbonylgruppen verbrückten p-Phenylenringen bestehen, sind eine Kunststoffklasse mit sehr hohem Eigenschaftsniveau. Sie sind hochtemperaturbeständig, selbstverlöschend, bei Beflammung raucharm und weisen hohe Steifigkeiten und Schlagzähigkeiten auf. Wegen ihres hohen kristallinen Anteils sind sie extrem lösungsmittelbeständig und spannungsrißbeständig.

Sie sind nach den üblichen Technologien der Thermoplastverarbeitung, d. h. durch Spritzgießen, Extrudieren, Blasformen usw. zu Formteilen, Folien, Hohlkörpern oder Profilen verarbeitbar.

Aufgrund ihrer hervorragenden Eigenschaftskombinationen sind aromatische Polyetherketone auch als Drahtlacke, Draht- und Kabelummantelungen oder als thermoplastische Matrix in Kombination mit hochsteifen und/oder hochfesten Verstärkungsfasern in Hochleistungsverbundwerkstoffen von steigender Bedeutung.

Nach der Lehre der DE-A-1 645 153 werden Polyetherketone durch Friedel-Crafts-Acylierung in Fluorwasserstoff als Lösungsmittel und mit Bortrifluorid als Katalysator hergestellt. Bevorzugt werden dabei die preiswerten Monomeren Diphenylether und Terephthaloylchlorid unter Bildung eines hochmolekularen Polyetherketons der Struktur

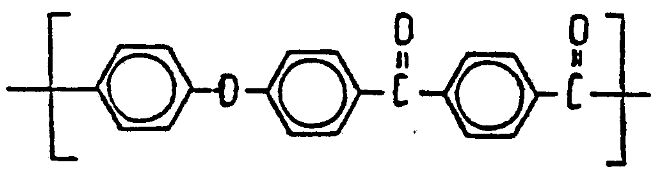

I

zur Reaktion gebracht. Das so hergestellte Polyetherketon hat einen kristallinen Schmelzpunkt von ca. 385° C, gemessen nach der DSC-Methode bei einer Aufheizrate von 32° C/min. Die thermoplastische Verarbeitung des Polyetherketons ist nur oberhalb des Kristallitschmelzpunktes möglich, sie erfolgt bevorzugt im Temperaturbereich von 390 bis 420° C. Bei der Verarbeitung unter diesen Temperaturbedingungen stellt man jedoch eine recht erhebliche Vernetzungsneigung des Polmyeren fest, die zu einem unerwünschten Anstieg der Schmelzviskosität und zu Extrudaten mit rauher Oberfläche und geringer Zähigkeit führt. Bei der Bestimmung der Lösungsviskosität in konzentrierter Schwefelsäure stellt man fest, daß sich das extrudierte Polymere nur teilweise löst, da sich vernetzte Gelpartikel gebildet haben.

Nach der Lehre der US-PS-3 516 966 ist die Vernetzungsneigung dieses Polyetherketons strukturinhärent. Es wird deshalb vorgeschlagen, bei der Herstellung des Polyetherketons I bis zu 30 Mol.-% des Terephthaloylchlorids durch Isophthaloylchlorid zu ersetzen. Dadurch wird der kristalline Schmelzpunkt und damit die Verarbeitungstempratur abgesenkt. Durch diesen teilweisen Ersatz von Terephthaloylchlorid durch Isophthaloylchlorid wird jedoch der kristalline Anteil der Polyetherketone herabgesetzt, was sich sehr nachteilig auf ihre Lösungsmittelbeständigkeit und Spannungsrißbeständigkeit auswirkt. So ist z. B. ein Copolymeres mit einem Gehalt von nur 10 % Isophthaloyl-Einheiten in Dichloressigsäure löslich. Der vorliegenden Erfindung lag nun die Aufgabe zugrunde, qualitativ hochwertige aromatische Polyetherketone auf Basis der preiswerten Monomeren Terephthaloylchlorid und Diphenylether herzustellen.

Nach der DE-A-1 645 153 wird in der Polykondensation als Friedel-Crafts-Katalysator Bortrifluorid eingesetzt, vorzugsweise in mindestens äquimolaren Mengen, bezogen auf die Säurehalogenidgruppn der Monomeren. Die Polykondensation wird in Fluorwasserstoff durchgeführt, der als Lösungsmittel für das gebildete Polymere benötigt wird. Darüber hinaus wird das Terephthaloylchlord durch den Fluorwasserstoff in einer Vorstufe in das reaktionsfähigere Terephthaloylfluorid umgewandelt.

Das Molverhältnis Terephthaloylchlorid zu Diphenylether liegt vorzugsweise zwischen 1 : 0,9 und 1 : 1,1, insbesondere zwischen 1 : 1,01 und 1 : 1,05. Durch einen geringen Überschuß eines Reaktanten, vorzugsweise Diphenylether, kann das Molekulargewicht des Polymeren geregelt werden.

Nach dem Stand der Technik werden die Monomeren und die gesamte Menge Fluorwasserstoff und Bortrifluorid gleichzeitig zusammengegeben. Dies hat zur Folge, daß die Reaktion in einem zweiphasigen System abläuft, da Diphenylether in Fluorwasserstoff unlöslich ist, insbesondere bei Anwesenheit großer Mengen an Bortrifluorid (Beispiel 7 der DE-A-1 645 153).

Überraschend und entgegen der Lehre der US-PS-3 516 966 erhält man hochmolekulare Polyetherketone mit Grenzviskositäten von 0,4 bis 1,6, gemessen in konz. Schwefelsäure, aus Terephthaloylchlorid und Diphenylether, die im Temperaturbereich von 400 bis 420°C nicht vernetzen, wenn die Polykondensationsreaktion in homogener Phase bei Temperaturen von nicht mehr als 10° C durchgeführt wird.

Diese Bedingung kann durch zwei Verfahrensvarianten verwirklicht werden. Nach der ersten Variante mischt man zunächst Terephthaloylchlorid und Diphenylether und gibt sodann ein inertes Lösungsmittel, vorzugsweise Nitromethan, hinzu. Das Massenverhältnis der Summe von Terephthaloylchlorid und Diphenylether zu Lösungsmittel beträgt bevorzugt 1 : 0,5 bis 1 : 1,5. Die Menge an inertem Lösungsmittel ist so bemessen, daß der Diphenylether vollkommen gelöst bleibt.

Danach gibt man soviel Fluorwasserstoff zu, daß mit Sicherheit das Terephthaloylchlorid zu Terephthaloylfluorid umgesetzt wird. Pro Mol Terephthaloylchlorid benötigt man mindestens 2 Mol; vorzugsweise gibt man 3 bis 5 Mol Fluorwasserstoff zu.

Sodann wird die Reaktionsmischung auf Temperaturen von -15 bis -25°C abgekühlt und in diesem Temperaturbereich soviel Bortrifluorid eingeleitet, daß ein Umsatz von 50 bis 85 % Polymer erreicht wird. Dann wird die Bortrifluoridzugabe unterbrochen und soviel Fluorwasserstoffs zudosiert, daß eine Polymerlösung mit 30 bis 45 % Polyetherketon gebildet wird.

Anschließend wird die Einleitung von Bortrifluorid fortgesetzt und die Temperatur dabei innerhalb von 1 bis 3 h. auf 0 bis +5°C erhöht. In diesem Temperaturbereich wird die Polykondensation so lange fortgeführt, bis die gewünschte Viskosität erreicht ist.

Durch diese Arbeitsweise wird sichergestellt, daß die Umsetzung ständig in einer homogenen Phase, abgesehen von der Anwesenheit des gasförmigen Bortrifluorid, stattfindet.

Nach einer anderen bevorzugten Verfahrensvariante wird die einphasige Polykondensation ohne Zusatz eines inerten Hilfslösungsmittels, das bei der späteren Aufarbeitung der Reaktionslösung störend sein kann, durchgeführt.

Dazu gibt man zu der Mischung aus Terephthaloylchlorid und Diphenylether nur gerade soviel Fluorwasserstoff, daß Terephthaloylfluorid gebildet wird und danach gerade noch soviel überschüssiger Fluorwasserstoff vorhanden ist, um die Mischung aus Terephthaloylfluorid und Diphenylether bei -10 bis -20°C in homogener Lösung zu halten. Pro Mol eingesetztem Terephthaloylchlorid sind dazu 6 bis 8 Mole Fluorwasserstoff notwendig. Sodann wird auf 10 bis -20°C abgekühlt und Bortrifluorid bis zu einem Umsatz von 50 bis 85 % Polymer eingeleitet. Danach wird die restliche Menge Fluorwasserstoff zugegeben, die notwendig ist, um eine Lösung mit einem Gehalt von 30 bis 45 Gew.-% Polyetherketon zu erhalten. Unter Temperaturerhöhung auf 0 bis 5°C innerhalb von 2 bis 3h wird weiter Bortrifluorid eingeleitet und zwischen 0 und 5°C die Polykondensation bis zur gewünschten Viskosität fortgesetzt.

In beiden Fällen sollte das Molverhältnis Terephthaloylchlorid zu Di-Phenylether vorzugsweise zwischen 1 : 0;9 und 1 : 1,1, insbesondere zwischen 1 : 1,01 und 1 : 1,05 liegen. Durch einen geringen Überschuß eines Reaktanten, vorzugsweise Diphenylether, kann das Molekulargewicht des Polymeren geregelt werden. Das Molverhältnis Fluorwasserstoff zu Terephthaloylchlorid sollte zu Beginn der Polykondensationsreaktion kleiner als 10 : 1 sein; im Verlauf der Reaktion sollte dann soviel Fluorwasserstoff zugesetzt werden, daß hinterher eine 20 bis 50 gew.-%-ige Lösung des Polyetherketons in Fluorwasserstoff vorliegt. Die Temperatur im Verlauf der Polykondensationsreaktion sollte +10°C nicht überschreiten, da sonst Vernetzung eintreten kann.

Das Polyetherketon wird durch Fällung in Wasser isoliert und zur Entfernung von Fluorwasserstoff und Bortrifluorid mehrmals mit polaren Lösungsmitteln und/oder Wasser soweit extrahiert, daß die Gehalte von Bor und Fluorid unterhalb 10 ppm liegen.

**Beispiel 1**

In ein 1,4-Liter-Rührgefäß aus (®)Hastelloy C, ausgestattet mit einem Doppelmantel zur Temperierung, einer Temperaturmeßeinrichtung, einer Temperaturkontrolleinrichtung, einer Viskositätsmessung über das Rührerdrehmoment, Rührer und einem Rückflußkühler aus Hastelloy C werden 203 g Terephthaloylchlorid (1 Mol), 173,4 g Diphenylether (1,02 Mol) und 150 g Nitromethan bei 20°C vorgelegt. Dann werden 80 g wasserfreier Fluorwasserstoff (4 Mol) zugeführt. Dabei wird sofort Terephthaloylfluorid unter Chlorwasserstoffentwicklung und Abkühlung auf -8°C gebildet. Nach ca. 1/2 h, wobei ein Temperaturanstieg auf +5°C erlaubt wurde, war die Chlorwasserstoffentwicklung beendet. Die Reaktionsmischung wurde auf -20°C abgekühlt und 105 g Bortrifluorid (77 % Umsatz) unter Rühren eingeleitet, wobei die Temperatur im Bereich von -15 bis -20°C gehalten wurde. Danach wurden weitere 400 g wasserfreier Fluorwasserstoff zudosiert und die Einleitung von Bortrifluorid fortgesetzt.

Gleichzeitig wurde die Temperatur innerhalb von 2 h auf +2°C erhöht und unter weiterer Bortrifluoriddurchleitung (ca. 5 g/h) und einem geringen Bortrifluoridüberdruck von 0,2 bar 7 h gerührt, wobei die Viskosität der Lösung stark anstieg und dann ein konstantes Niveau erreichte.

Die viskose orange-rote Polymerlösung wurde mit Stickstoff aus einer Düse am Boden des Rührgefäßes in ein Wasserbad gedrückt, wo sie sofort koagulierte. Der so erhaltene Strang wurde durch Extraktion mit heißem (90°C) Wasser gereinigt und danach granuliert und getrocknet. Die Grenzviskosität des Polyetherketons betrug 1,01, gemessen in konz. Schwefelsäure bei 25°C. Es wurde nach 10 min. Aufheizzeit bei 415°C mittels eines Kapillarviskosimeters zu einem glatten, zähen Strang extrudiert. Nach der Verarbeitung betrug die Grenzviskosität 0,99, womit gezeigt ist, daß das erfindungsgemäße Verfahren ein stabiles, nicht vernetzendes Polyetherketon liefert.

**Beispiel 2**

In der Versuchsapparatur aus Beispiel 1 wurden zu einer Mischung von 203 g Terephthaloylchlorid und 173,4 g Diphenylether bei 20°C 140 g (7 Mol) wasserfreier Fluorwasserstoff dosiert.

Die Reaktionsmischung kühlte sich durch die Chlorwasserstoffentwicklung auf -10°C ab. Nach ca. 3 /4h war die Gasentwicklung beendet. Die Reaktionslösung wurde auf -15°C abgekühlt und 95 g Bortrifluorid (70 %

Umsatz) unter Rühren eingeleitet und dabei die Temperatur bei -15°C gehalten. Danach wurden weitere 460 g wasserfreier Fluorwasserstoff zudosiert und die Einleitung von Bortrifluorid unter gleichzeitiger Temperaturerhöhung auf +2°C innerhalb von 2 h fortgesetzt. Bei 2°C wurden unter Rühren ca. 5 g/h Bortrifluorid unter einem Überdruck von 0,2 bar eingeleitet. Nach ca. 7 h wurde ein konstant hohes Viskositätsniveau erhalten und das Polyetherketon wie in Beispiel 1 isoliert, gereinigt, getrocknet und geprüft. Das so erhaltene Polyetherketon wies eine Grenzviskosität von 1,05 in konz. Schwefelsäure auf und lies sich im Kapillarviskosimeter nach einer Aufheizzeit von 10 min. bei 415°C zu einem glatten, zähen Strang extrudieren. Nach der Extrusion betrug die Grenzviskosität 1,05.

**Beispiel 3** (Vergleichsbeispiel nach dem Stand der Technik)

In die Apparatur aus Beispiel 1 wurden 203 g Terephthaloylchlorid und 173,4 g Diphenylether vorgelegt. Bei 20°C wurden 600 g wasserfreier Fluorwasserstoff zugeführt, worauf unter Chlorwasserstoffentwicklung die Temperatur auf -3°C abfiel. Nach ca. 3/4 h, in der sich die Reaktionslösung auf +3°C erwärmte, wurde auf -15°C abgekühlt und 136 g Bortrifluorid eingeleitet. Dabei war die Temperatur nur schwer auf -15°C zu halten, vermutlich infolge von sporadischen Wärmestaus bei der heterogenen Reaktion. Unter weiterer Einleitung von Bortrifluorid (ca. 5 g/h) und einem Bortrifluoridüberdruck von 0,2 bar und Temperaturerhöhung auf +2°C innerhalb von 2 h wurde noch 7 h bei +2°C gerührt. Es wurde im Vergleich zu den erfindungsgemäßen Beispielen eine tiefer rote Lösung erhalten, aus der das Polyetherketon wie beschrieben isoliert wurde. Es wies eine Grenzviskosität von 0,82 auf und ergab bei der Verarbeitung bei 415°C einen rauhen, spröden Strang, der schlecht extrudierbar war. Eine Viskositätsmessung am Extrudat war wegen der Bildung von Quellkörpern nicht möglich.

**Patentansprüche**

1. Polyetherketone, bestehend aus Struktureinheiten der Formel

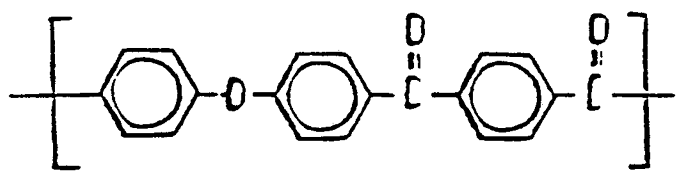

mit Grenzviskositäten von 0,4 bis 1,6, gemessen in konz. Schwefelsäure bei 25°C, erhältlich durch Polykondensation in homogener Phase bei Temperaturen von nicht mehr als 10°C.

2. Verfahren zur Herstellung der Polyetherketone nach Anspruch 1 durch Friedel-Crafts-Acylierung von Terephthaloylchlorid oder Terephthaloylfluorid mit Diphenylether in Fluorwasserstoff als Lösungsmittel mit Bortrifluorid als Katalysator, dadurch gekennzeichnet, daß während der Polykondensationsreaktion die Temperatur nicht über +10°C ansteigt und die Reaktionsmischung eine homogene Lösung ist.

3. Verfahren zur Herstellung von Polyetherketonen nach Anspruch 2, dadurch gekennzeichnet, daß zum Lösen des Diphenylethers ein inertes Lösungsmittel, vorzugsweise Nitromethan zugegeben wird.

**Claims**

1. A Polyether-ketone consisting of structural units of the formula

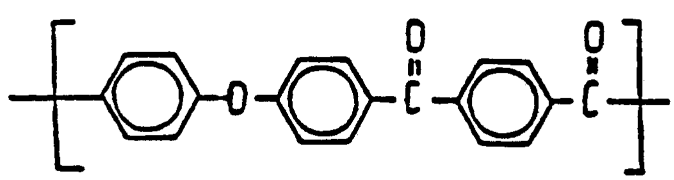 I

and having an intrinsic viscosity of from 0,4 to 1,6, measured in concentrated sulfuric acid at 25°C, which can be obtained by polycondensation in the homogeneous phase at not more than 10°C.

2. A process for the preparation of a polyether-ketone as claimed in claim 1 by Friedel-Crafts acylation of terephthaloyl chloride or terephthaloyl fluoride with diphenyl ether in hydrogen fluoride as a solvent and with boron trifluoride as a catalyst, wherein, during the polycondensation reaction, the temperature does not

exceed 10°C and the reaction mixture is a homogeneous solution.

3. A process for the preparation of a polyether-ketone as claimed in claim 2, wherein an inert solvent, preferably nitromethane, is added in order to dissolve the diphenyl ether.

**Revendications**

1. Polyéthercétones se composant d'unités structurales de la formule

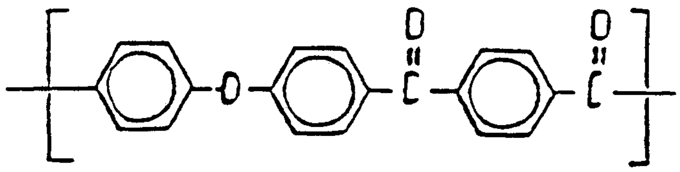

avec des viscosités limites de 0,4 à 1,6, telles que mesurées dans de l'acide sulfurique concentré à 25°C, que l'on peut obtenir par polycondensation en phase homogène à des températures non supérieures à 10°C.

2. Procédé de préparation des polyéthercétones suivant la revendication 1 par une acylation de Friedel-Crafts du chlorure de téréphtaloyle ou du fluorure de téréphtaloyle avec l'éther diphénylique dans de l'acide fluorhydrique servant de solvant et à l'aide de trifluorure de bore à titre de catalyseur, caractérisé en ce qu'au cours de la réaction de polycondensation, la température ne s'élève pas au-delà de +10°C et le mélange réactionnel est une solution homogène.

3. Procédé de préparation de polyéthercétones suivant la revendication 2, caractérisé en ce que pour la mise en solution de l'éther diphénylique, on ajoute un solvant inerte, de préférence le nitrométhane.